# EUROPÄISCHE PATENTSCHRIFT

(11) **EP 3 587 895 B1**
(45) Veröffentlichungstag und Bekanntmachung des Hinweises auf die Patenterteilung: **07.10.2020**
(21) Anmeldenummer: 18179194.8
(22) Anmeldetag: 22.06.2018
(51) Int. Cl.: F17C 13/04

(54) **SELBSTDICHTENDER VENTILANSCHLUSS FÜR DRUCKBEHÄLTER**
SELF-SEALING VALVE CONNECTION FOR PRESSURE VESSEL
RACCORD DE SOUPAPE AUTOÉTANCHÉIFIÉ POUR RÉSERVOIR SOUS PRESSION

(43) Veröffentlichungstag der Anmeldung: 01.01.2020
(73) Patentinhaber: NPROXX B.V., 6422 RK Heerlen (NL)
(72) Erfinder: Kronholz, Stephan, 52428 Jülich (DE); Zimmermann, Edwin, 52223 Stolberg (DE); Krath, Wilhelm, 52379 Langerwehe (DE); Mülheims, Josef, 52428 Jülich (DE)
(74) Vertreter: FARAGO Patentanwälte

(56) Entgegenhaltungen:
- DE-A1-102009 008 051
- DE-C1- 19 751 411
- US-A1- 2018 163 927

## Beschreibung

### Gebiet der Erfindung

Die Erfindung betrifft einen Druckbehälter mit einem selbstdichtenden Ventilanschlussstück und ein Verfahren zur Herstellung eines solchen Druckbehälters.

### Hintergrund der Erfindung

Der Markt für Druckbehälter, die mit Faserverbundmaterial verstärkt werden, wächst kontinuierlich. Die zunehmende Förderung von Erdgas und Fracking-Gas macht speziell in Ländern ohne entsprechendes Pipelinenetz eine Speicherung in Druckbehältern erforderlich. Hinzu kommt der Automobilsektor, der stark an der Entwicklung von Brennstoffzellen-Fahrzeugen arbeitet, bei denen der Brennstoff in Form von gasförmigem Wasserstoff unter hohem Druck in Druckbehältern gespeichert werden soll. Für den Transport der Druckbehälter sind leichte Druckbehälter gewünscht, da ein Transport von Druckbehältern mit hohen Behältergewichten unnötig viel Energie verbraucht und daher zu hohe Transportkosen verursacht.

Hierbei müssen die Druckbehälter mit einem unter Hochdruck im Druckbehälter gespeicherten Füllgas über einen großen Temperaturbereich und über einen langen Zeitraum zuverlässig unter alternierenden Lastzuständen (Entleerung des Druckbehälters, Wiederbefüllung des Druckbehälters und so weiter) der Norm und/oder den Kundenanforderungen entsprechend dicht sein. Druckbehälter nach dem Stand der Technik versuchen über O-Ring-Dichtungen die Gasdichtigkeit herzustellen. Eine Redundanz für die abdichtende Stelle liegt nicht vor und führt daher leicht zu einem Versagen der Dichtung, sofern sich die Sitz- und Passverhältnisse des O-Rings relativ zu den anderen Komponenten ändern.

Es ist daher wünschenswert, einen Ventilanschluss für Druckbehälter zur Verfügung zu haben, der selbstdichtend ist und eine dauerhafte und zuverlässige Abdichtung des Ventilanschlusses gegen den Innenbehälter gewährleistet.

DE102009008051 A1 offenbart eine Dichtungsanordnung für einen Druckbehälter.

### Zusammenfassung der Erfindung

Es ist eine Aufgabe der vorliegenden Erfindung, einen Druckbehälter mit einem Ventilanschluss zur Verfügung zu stellen, der selbstdichtend ist und eine dauerhafte und zuverlässige Abdichtung des Ventilanschlusses gegen den Innenbehälter gewährleistet.

Diese Aufgabe wird gelöst durch einen Druckbehälter umfassend einen Innenbehälter mit einer Innen- und Außenseite aus einem unter Druck zumindest teilweise plastisch verformbaren Innenbehältermaterial zur Bereitstellung eines Speichervolumens im Druckbehälter, eine auf den Innenbehälter zu dessen Verstärkung aufgebrachte Außenschicht, und ein auf dem Innenbehälter angeordnetes Ventilanschlussstück mit zweiteiligem hohlförmigen Dichtkonus und Außenstück zur Aufnahme eines Ventils und zur Abdichtung des Speichervolumens gegenüber dem Innenbehälter, der zum Anschließen des Ventilanschlussstücks eine zylinderförmig aus der Außenseite hervorragende zum Speichervolumen hin innen offene Auswölbung umfasst, wobei der zweiteilige Dichtkonus an einer Innenseite der Auswölbung und das Außenstück zur Erzeugung eines Abdichtdrucks zwischen zweiteiligem Dichtkonus, Auswölbung und Außenstück auf einer Außenseite der Auswölbung positioniert ist und auf seiner zur Auswölbung ausgerichteten Seite eine geeignet geformte Nut mit einer dem Speichervolumen zugewandten ersten Kante und einer in entgegengesetzter Richtung vorhandenen zweiten Kante zur Aufnahme eines unter dem Abdichtdruck abdichtenden Dichtungsrings aufweist, wobei die Nut und der Dichtungsring so dimensioniert sind und das Innenbehältermaterial dazu vorgesehen ist, unter dem Abdichtdruck aufgrund seiner plastischen Verformbarkeit zumindest in beiden Lücken zwischen Dichtungsring und erster sowie zweiter Kante hineinragende erste und zweite Dichtungswülste auszubilden, und der zweiteilige Dichtkonus eine hohlförmige äußere Hülse mit einem kleinsten Innendurchmesser, einem auf die Auswölbung angepassten Außendurchmesser und einer in Richtung der Auswölbung zumindest lokal eingewölbten Innenseite, und einen hohlförmigen inneren Klemmkonus mit einem größten Außendurchmesser kleiner als ein Innendurchmesser der Auswölbung und größer als der kleinste Innendurchmesser der Hülse und einer in Richtung der Auswölbung zumindest lokal vorgewölbten Außenseite umfasst, wobei die Hülse von außen auf der Innenseite der Auswölbung positioniert ist und die vorgewölbte Außenseite des Klemmkonus von innen mit Hilfe eines Positionierungsmittels eingreifend so in die eingewölbte Innenseite der Hülse positioniert ist, dass der innere Klemmkonus in einen Presssitz mit der Hülse gebracht ist.

Der Innenbehälter kann dabei einteilig oder mehrteilig gefertigt sein. Der Innenbehälter kann dabei lediglich zwei Polkappen umfassen, wobei eine oder beide der Polkappen gegebenenfalls einen zylinderförmig ausgestalteten Randbereich umfassen können. Hierbei sind die Ränder der Polkappen bei einer mehrteiligen Herstellung des Innenbehälters direkt aneinandergesetzt und geeignet miteinander verbunden. Alternativ kann der Innenbehälter auch zusätzlich zu den Polkappen ein zylindrisches Mittelteil mit umfassen, das vorzugsweise aus demselben Material wie die Polkappen hergestellt ist. Eine Zylinderachse des Innenbehälters beziehungsweise Druckbehälters entspricht der Symmetrieachse des zylindrischen Abschnitts des Innenbehälters (falls vorhanden) oder im Falle lediglich zweier den Innenbehälter bildenden Polkappen die Achse zwischen den Mittelpunkten beziehungsweise zentralen Punkten der jeweiligen Polkappen, die auch die höchsten Erhebungen der jeweiligen Dome gebildet durch die Polkappen entsprechen.

Das plastisch verformbaren Innenbehältermaterial hat die Eigenschaft, zwar in sich fest und stabil zu sein, allerdings mit einer gewissen Fließfähigkeit ausgestattet zu sein, sodass es sich zumindest an seiner Oberfläche unter hohem Druck plastisch verformen und somit an die Kontur der drückenden Flächen anpassen kann, ohne aber dabei großflächige Verformungen entstehen zu lassen. Der Innenbehälter hat zudem die Funktion, ein gasdichtes Speichervolumen für die Speicherung von Füllgas im Druckbehälter bereitzustellen, so dass das Innenbehältermaterial gasdicht sein sollte, beispielweise Metall oder Kunststoff, als Kunststoff vorzugsweise PA oder PE, als Einzelschicht oder als Mehrfachschichtsystem. Das Füllgas kann dabei ein beliebiges Gas sein, beispielsweise Wasserstoff. Die Außenschicht verleiht dem Druckbehälter eine mechanische Stabilität, sodass die Funktionalität der Gasundurchlässigkeit und Druckfestigkeit auf die zwei Komponenten Innenbehälter und Außenschicht separiert wurde. Die Außenschicht kann beispielsweise eine Faserverbundschicht sein, die auf den Innenbehälter gewickelt oder mit anderen Techniken aufgebracht wurde.

Der in der Nut positionierte Dichtungsring füllt die Nut in dem Außenstück nicht vollständig aus, sondern lässt in der Nut auf beiden Seiten zur Innenseite des Außenstücks Lücken, eine erste und zweite Lücke, die für die Bereitstellung einer Redundanz in der Dichtwirkung verwendet werden. Die Ausgestaltung der Komponenten des Ventilanschlussstücks und der Auswölbung (oder Auskragung) des Innenbehälters stellen in Verbindung mit der geeigneten Fließfähigkeit des Innenbehältermaterials und die dadurch bewirkte Ausbildung der Dichtungswülste sicher, dass für den Druckbehälter eine verbesserte Abdichtwirkung mit gleichzeitiger Positionssicherheit der Komponenten des Ventilanschlussstücks im Druckbehälter gewährleistet ist. Zudem bleibt der Dichtungsring bei Druckwechsel durch die beiden Dichtungswülste dauerstabil in der Nut. Dieses Dichtungskonzept stellt eine Dreifach-Redundanz zum Abdichten des Speichervolumens dar, indem eine Abdichtung von (i) erster Dichtungswulst der Auswölbung gegen das Außenstück, (ii) Dichtkonus über Auswölbung auf Dichtungsring und (iii) zweiter Dichtungswulst der Auswölbung gegen das Außenstück eine dreifache Abdichtung in Reihe bereitstellt und somit die Zuverlässigkeit und Dauerhaftigkeit der Abdichtung enorm verbessert. Durch die Ausbildung der Dichtungswülste aufgrund des durch das Ventilanschlussstück ausgeübten Abdichtdruck ist das Ventilanschlussstück somit zusätzlich selbstabdichtend. Das Dichtungskonzept ist dabei unabhängig vom Material des zweiteiligen Dichtkonus und des Anschlussstücks, wobei die Materialien für den zweiteiligen Dichtkonus und Anschlussstück allerdings eine zumindest geringfügigere Fließfähigkeit als das Innenbehältermaterial aufweisen.

Durch den Sitz des Klemmkonus in der Wölbung der Hülse wird ein Verrutschen des Klemmkonus relativ zur Hülse verhindert. Durch die spezifizierten Außen- und Innendurchmesser der Hülse und des Klemmkonus relativ zueinander und zur Auswölbung der Polkappe ist es möglich, dieses Dichtkonzept auch auf einteilige Innenbehälter anzuwenden, wobei natürlich weiterhin auch mehrteilige Innenbehälter mit diesem Dichtkonzept zuverlässig abgedichtet werden können. Bei einem einteiligen Innenbehälter werden vor dem Aufschieben der Hülse zunächst der Klemmkonus mit Hilfe einer Positionierungshilfe, beispielsweise einer Stange mit verspreizbarem Ende unterhalb des Klemmkonus im Speichervolumen oder mit Gewinde im Klemmkonus gehalten und danach die Hülse von außen in die Auswölbung gesteckt. Nun wird der Klemmkonus mit der Positionierhilfe von innen in die Hülse gezogen, wobei Hülse und Auswölbung leicht gedehnt werden, damit die Innenseite der Hülse und die Außenseite des Klemmkonus in einen Presssitz gebracht werden. Bei mehrteiligen Innenbehältern kann auf eine Positionierhilfe verzichtet werden, da die Auswölbung von innen her frei zugänglich ist und somit der Klemmkonus einfach von dort in die Hülse geschoben werden kann. Lokal vorgewölbt beziehungsweise lokal eingewölbt bezeichnet dabei Vorwölbungen beziehungsweise Einwölbungen, die sich über die gesamte Innenseite der Hülse beziehungsweise Außenseite des Klemmkonus erstrecken könnten, aber auch lokale Vorwölbungen oder Einwölbungen von Teilen der betreffenden Seiten bezeichnen. Außenstück, Hülse und Klemmkonus können aus allen dafür geeigneten Materialien, beispielsweise Metall oder Kunststoff hergestellt sein.

Der spezifizierte Druckbehälter ist durch das erfindungsgemäße Dichtungskonzept sehr flexibel aufgebaut, sodass kundenspezifische Ventilanschlussstücke über entsprechende Formung der Auswölbung und des zweiteiligen Dichtkonus leicht zu adaptieren sind. Zusätzlich ist eine Integration einer zusätzlichen Hülse zur Integration von Sensorik, Messfühlern oder anderer in den Druckbehälter ragenden Bauteil weiterhin möglich.

Der erfindungsgemäße Druckbehälter stellt somit einen Druckbehälter mit einem Ventilanschluss dar, der selbstdichtend ist und eine dauerhafte und zuverlässige Abdichtung des Ventilanschlusses gegen den Innenbehälter gewährleistet.

In einer Ausführungsform ist der Innenbehälter einteilig hergestellt. Das voranstehend beschriebene Dichtkonzept ist sehr gut auf einteilige Innenbehälter anzuwenden, da das letztendlich abdichtende Mittel, der innere Klemmkonus, so bemaßt ist, dass er durch die abzudichtende Öffnung hindurchpasst und somit mittels eines geeigneten Positioniermittels von innen her in die benötigte Position gebracht werden kann, ohne dass dafür ein Zugang des Innenbehälters von hinten oder innen zusätzlich zu ohnehin für die Befüllung und Entleerung des Druckbehälters benötigte vorhandenen Öffnung durch die Auswölbung hindurch benötigt wird.

In einer weiteren Ausführungsform ist die Hülse so ausgeformt, dass sie zu einer Oberseite der Auswölbung einen Anschlag umfasst und/oder zumindest teilweise an einer sich zumindest über Hülse und Auswölbung erstreckende Innenseite des Außenstücks anliegt. Damit kann die Hülse nicht in das Speichervolumen hineinrutschen und/oder nicht aus der Öffnung der Auswölbung entlang deren Innenseite herausrutschen, beispielsweise bei Positionierung des Klemmkonus von Innen.

In einer weiteren Ausführungsform ist die Hülse so dimensioniert, dass das Innenbehältermaterial aufgrund seiner plastischen Verformbarkeit einen dritten Wulst um die Hülse auf ihrer zum Speichervolumen hin gerichteten Unterseite ausbildet. Dadurch wird ein Verrutschen der Hülse in Richtung des Speichervolumens ebenfalls verhindert. Dadurch wird der Abdichtdruck auf den Dichtungsring wie ursprünglich eingestellt aufrechterhalten. Außerdem kann so die Hülse und der mit ihre erfindungsgemäß verankerte Klemmkonus nicht mehr bei Erschütterungen des Druckbehälters in das Speichervolumen hineinrutschen oder gar hineinfallen.

In einer weiteren Ausführungsform ist der zweiteilige Dichtkonus oder das Außenstück so geformt, dass zwischen dem Speichervolumen und einer Oberseite der Auswölbung eine offene Gasverbindung zum Speichervolumen besteht. Damit liegt der Innendruck im Speichervolumen auch oben an der Auswölbung des Innenbehälters an. Die Gasverbindung kann beispielsweise durch geeignete Kanäle, Vertiefungen oder Riefen in Hülse und/oder Klemmkonus hergestellt werden.

In einer weiteren Ausführungsform umfasst die Hülse eine der Auswölbung zugewandten Außenseite, wobei die Fläche der auf der Auswölbung aufliegenden Außenseite der Hülse und/oder die auf der Hülse aufliegende Außenseite des Klemmkonus kleiner ist als deren jeweilige Innenseiten. Durch das unterschiedliche Flächenverhältnis zwischen Innenseite und Außenseite bei vorhandener Gasverbindung zwischen Speichervolumen und Oberseite der Auswölbung wird der Abdichtdruck durch den Innendruck im Speichervolumen des Druckbehälters zusätzlich verstärkt und der Dichtkonus bei Druckanstieg im Speichervolumen (beispielsweise bei der Befüllung des Speichervolumens mit der Gasfüllung, z.B. bis 500 bar) zusätzlich in Richtung des Außenstücks gepresst, was die Dichtwirkung und deren Zuverlässigkeit noch weiter verbessert.

In einer weiteren Ausführungsform besitzt die Nut (oder Vertiefung) eine Kontur, die an eine Form des Dichtungsrings im unbelasteten Zustand angepasst ist. Damit können sich hinter dem Dichtungsring keine undefinierten Hohlräume mehr bilden, sodass die Dichtwirkung des Dichtungsrings weiter verbessert wird.

In einer weiteren Ausführungsform ist der Dichtungsring ein O-Ring. O-Ringe bieten einerseits zuverlässige Abdichteigenschaften und andererseits lassen sich für O-Ringe am einfachsten geeignete Konturen in der Nut nachbilden. Hierbei ist die Krümmung der Nut an die Krümmung der Oberfläche des O-Rings angepasst. Der Dichtungsring beziehungsweise der O-Ring können dabei aus allen für die Gasabdichtung geeigneten Materialien bestehen.

In einer weiteren Ausführungsform ist das Innenbehältermaterial zumindest für die Auswölbung ein PA-, PE- oder ein Mehrschichtmaterial aus diesen Materialien. Diese Materialien bieten geeignete Eigenschaften zur Herstellung des Innenbehälters und stellen zusätzlich eine geeignete Fließfähigkeit des Material zur Ausbildung der Dichtungswülste bereit, wodurch die zusätzliche Abdichtwirkung mit gleichzeitiger Positionssicherheit der Komponenten des Anschlussstücks im Druckbehälter gewährleistet wird. Der Innenbehälter kann dabei auch vollständig aus diesen Materialien gefertigt sein. Obige Materialien lassen sich zudem gut miteinander verschweißen, um aus den Komponenten Polkappen und gegebenenfalls dem Mittelteil einen Innenbehälter zur Bereitstellung des Speichervolumens herzustellen.

In einer weiteren Ausführungsform umfasst das Ventilanschlussstück ein zusätzliches Sicherungselement, das den zweiteiligen Dichtkonus und das Außenstück miteinander verbindet. Damit wird ein Verrutschen des zweiteiligen Dichtkonus, d.h. der Hülse und des Klemmkonus, relativ zum Außenstück, insbesondere in Richtung des Außenstücks, verhindert.

In einer weiteren Ausführungsform ist das Sicherungselement im Außenstück gelagert und umfasst zumindest auf seiner dem Dichtkonus zugewandten Seite ein Gewinde, das zum Eingriff in die Innenseite des Dichtkonus vorgesehen ist. Das Sicherungselement kann beispielsweise eine Hohlschraube oder ein entsprechend geformter Ring mit Durchlassöffnungen für die Druckbeaufschlagung der Oberseite der Auswölbung des Innenbehälters sein.

In einer weiteren Ausführungsform umfasst das Außenstück des Ventilanschlussstücks Verbindungsmittel zur druckstabilen Aufnahme des Ventils. Beispielsweise wird ein Ventil in ein entsprechendes Gewinde als Verbindungsmittel des Außenstücks druckstabil eingeschraubt.

Die Erfindung betrifft des Weiteren ein Verfahren zur Herstellung eines erfindungsgemäßen Druckbehälters umfassend einen Innenbehälter mit einer Innen- und Außenseite aus einem unter Druck zumindest teilweise plastisch verformbaren Innenbehältermaterial ausgestaltet zur Aufnahme eines Ventils, eine auf dem Innenbehälter positionierte Außenschicht und ein Ventilanschlussstück mit einem zweiteiligen Dichtkonus aus einer hohlförmigen äußeren Hülse und einem hohlförmigen inneren Klemmkonus sowie einem Außenstück, umfassend die nachfolgenden Schritte:
- Bereitstellen des Innenbehälters mit einem Speichervolumen und einer zylinderförmig aus der Außenseite des Innenbehälters hervorragenden innen offenen Auswölbung;
- Positionieren des Klemmkonus mit einem größten Außendurchmesser kleiner als ein Innendurchmesser der Auswölbung und einem größten Außendurchmesser größer als der kleinste Innendurchmesser der Hülse in Richtung der Auswölbung mittels einer Positionierhilfe durch die Auswölbung hindurch im Speichervolumen des Innenbehälters;
- Einsetzen der hohlförmigen Hülse des Dichtkonus von außen in einen Passsitz auf die Innenseite der Auswölbung, wobei die Hülse einen kleinsten Innendurchmesser und einen auf die Auswölbung angepassten Außendurchmesser umfasst, während Positionierhilfe und Klemmkonus davon nicht beeinflusst werden;
- Aufsetzen des Außenstücks auf die Außenseite der Auswölbung, wobei das Außenstück auf seiner zur Auswölbung ausgerichteten Seite eine geeignet geformte Nut mit einer dem späteren Speichervolumen zugewandten ersten Kante und einer in entgegengesetzter Richtung vorhandenen zweiten Kante und einen in der Nut positionierten und unter einem Abdichtdruck abdichtenden Dichtungsring aufweist;
- Positionieren des Klemmkonus mit Hilfe der Positionierhilfe von innen in der Hülse, wobei die Außenseite des Klemmkonus in die Innenseite der Hülse zu einem Presssitz mit der Hülse eingreift, sodass ein Abdichtdruck zwischen zweiteiligem Dichtkonus, Auswölbung und Außenstück erzeugt wird;
- Ausbilden zumindest von ersten und zweiten Dichtungswülsten, die unter dem Abdichtdruck bei entsprechend dimensionierter Nut und Dichtungsring aufgrund der plastischen Verformbarkeit des Innenbehältermaterials in beide Lücken zwischen Dichtungsring und erster sowie zweiter Kante zur Abdichtung des Speichervolumens gegenüber dem späteren Innenbehälter hineinragen;
- Herstellen der Außenschicht auf dem Innenbehälter zur Verstärkung des Druckbehälters; und
- Aufsetzen des Ventils in das Ventilanschlussstück zum Verschluss des Druckbehälters.
Die Außenschicht kann hierbei beispielsweise eine Faserverbundschicht sein, die auf den Innenbehälter gewickelt oder mit anderen Techniken aufgebracht ist.

Das erfindungsgemäße Verfahren stellt somit einen Druckbehälter mit einem Ventilanschluss zur Verfügung, der selbstdichtend ist und eine dauerhafte und zuverlässige Abdichtung des Ventilanschlusses gegen den Innenbehälter gewährleistet.

In einer Ausführungsform des Verfahrens umfasst dieses den weiteren Schritt des Ausbildens einer dritten Wulst um den Dichtkonus auf seiner zum Speichervolumen hin gerichteten Unterseite aufgrund der plastischen Verformbarkeit des Innenbehältermaterials.

In einer weiteren Ausführungsform des Verfahrens besteht die Außenschicht aus Faserverbundmaterial und wird beim Schritt des Herstellens auf den Innenbehälter gewickelt. Da der Innenbehälter selber den Wickeldorn für die Außenschicht darstellt, wird die Außenschicht passgenau für den jeweiligen Innenbehälter hergestellt.

In einer weiteren Ausführungsform des Verfahrens wird das Aufsetzen des Ventils mittels eines Verschraubens durchgeführt. Dazu kann das Außenstück bereits ein entsprechend vorgesehenes Gewinde umfassen oder das Ventil besitzt ein Gewinde, das sich in das Außenstück hineinschneidet.

In einer weiteren Ausführungsform des Verfahrens werden das Einsetzen der Hülse bis zu einem Anschlag der Hülse auf eine Oberseite der Auswölbung und/oder das Aufsetzen des Außenstücks bis zum Kontakt einer Innenseite des Außenstücks auf der Hülse und/oder auf dem Klemmkonus durchgeführt. Damit sind Hülse und/oder Klemmkonus durch das Außenstück so fixiert, dass sie nicht entlang der Innenseite der Auswölbung nach außen rutschen können, was dem Abdichtdruck und damit die Dichtwirkung verändert könnte.

In einer weiteren Ausführungsform des Verfahrens wird der Innenbehälter einteilig hergestellt, beispielsweise als Blasformteil oder mittels eines Spritzgussverfahrens. Die einteilige Herstellung vermeidet zusätzliche Prozessschritte wie ein Zusammenfügen von Polkappen und gegebenenfalls einem Mittelteil. Außerdem vermeidet die einteilige Herstellung Fügefehler beim Übergang von Polkappe zu Mittelteil, die möglicherweise Gaslecks darstellten könnten. Durch die Einteiligkeit ist der Innenbehälter zudem mechanisch robuster als ein zusammengefügter Innenbehälter.

Die voranstehend beschriebenen Ausführungsformen können im Rahmen der vorliegenden Erfindung in allen möglichen Kombinationen miteinander verwirklicht werden.

### Kurze Beschreibung der Abbildungen

Diese und andere Aspekte der Erfindung werden im Detail in den Abbildungen wie folgt gezeigt.
- Fig.1:: eine Ausführungsform des erfindungsgemäßen Druckbehälters im seitlichen Schnitt;
- Fig.2:: der in Fig. 1 gezeigte Druckbehälter in einer vergrößerten Ausschnittdarstellung des Ventilanschlussstücks und Auswölbung des Innenbehälters;
- Fig.3:: schematische Darstellung des erfindungsgemäßen Dichtungskonzepts mit Außenstück, Auswölbung des Innenbehälters, dem zweiteiligen Dichtkonus und den ausgebildeten Dichtungswülsten;
- Fig.4:: eine Ausführungsform des erfindungsgemäßen Verfahrens zur Herstellung des erfindungsgemäßen Druckbehälters.

### Detaillierte Beschreibung der Ausführungsbeispiele

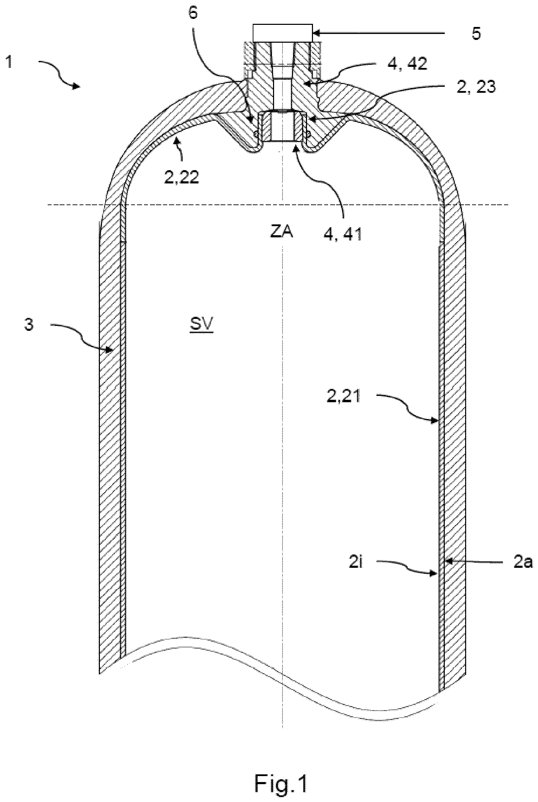

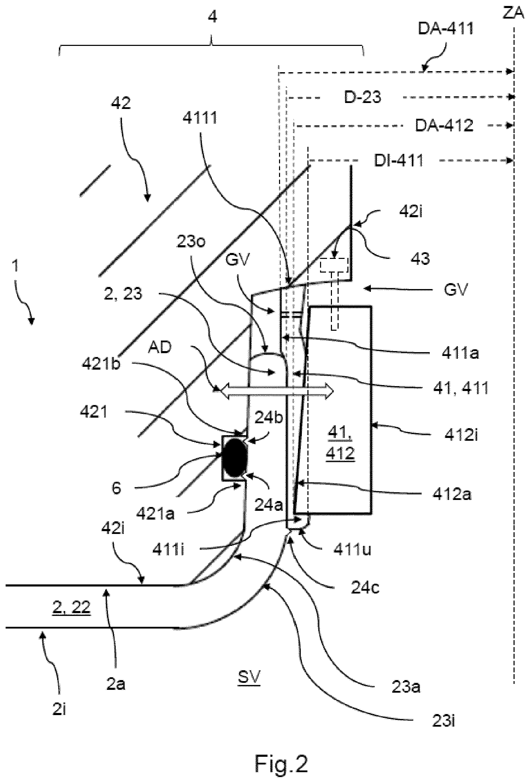

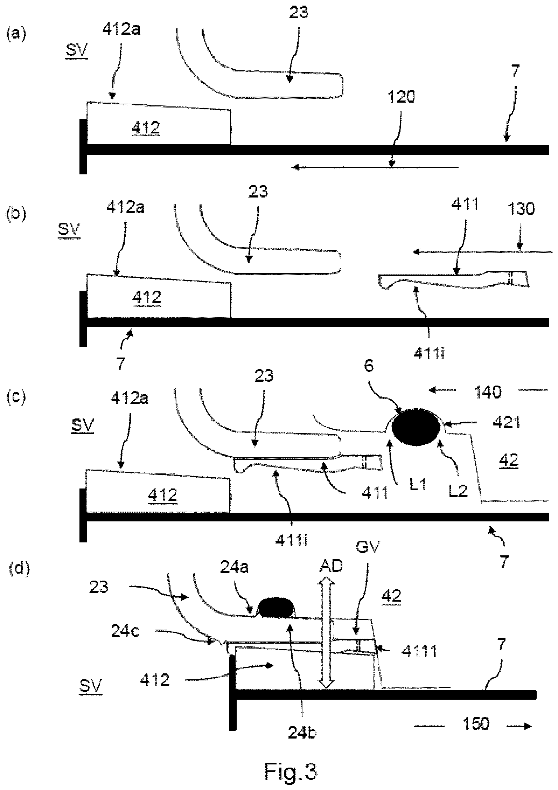

Fig.1 zeigt eine Ausführungsform des erfindungsgemäßen Druckbehälters 1 im seitlichen Schnitt umfassend einen einteiligen Innenbehälter 2 mit einer Innen- und Außenseite 2i, 2a aus einem unter Druck zumindest teilweise plastisch verformbaren Innenbehältermaterial hier mit einem zylindrischen Mittelteil 21 mit einer Zylinderachse ZA und mit zwei das zylindrische Mittelteil 21 abschließenden Polkappen 22 zur Bereitstellung eines Speichervolumens SV im Druckbehälter. Aus Übersichtsgründen ist der Druckbehälter 1 nur zur Hälfte gezeigt. Die hier nicht gezeigte gegenüberliegende Polkappe 22 zum Verschließen des Mittelteils 21 auf der anderen Seite kann keine Auswölbung 23, sondern stattdessen eine durchgehende geschlossene Kontur, umfassen oder entspricht der gezeigten Polkappe 22 mit einer eigenen verschließbaren Öffnung oder einem entsprechenden Ventilanschlussstück. Der Innenbehälter 2 kann natürlich auch ohne das hier gezeigte zylindrische Mittelteil 21 aus nur den beiden Polkappen 22 gefertigt sein. Für einen solchen Innenbehälter gelten analog alle Ausführungen der Erfindung wie in den Figuren 1 - 4 gezeigt gleichermaßen. Das Innenbehältermaterial kann jedes plastisch verformbare Material sein. Vorzugsweise ist das Innenbehältermaterial zumindest für die Auswölbung 23 ein PA-, PE- oder ein Mehrschichtmaterial aus diesen Materialien. Auf den Innenbehälter 2 ist zu dessen Verstärkung eine Außenschicht 3 aufgebracht. Damit der Druckbehälter mit Füllgas befüllt und dieses zu einem späteren Zeitpunkt aus dem Speichervolumen SV wieder abgelassen werden kann, ist ein Ventilanschlussstück 4 mit zweiteiligem Dichtkonus 41 und Außenstück 42 mit einem Dichtungsring 6 auf der Polkappe 22 zur Aufnahme eines Ventils 5 und zur Abdichtung des Speichervolumens gegenüber dem Innenbehälter 2 angeordnet. Dazu ragt der Innenbehälter 2 zylinderförmig als Auswölbung 23 aus der Außenseite 2a der Polkappe 22 hervor, die eine zum Speichervolumen SV hin innen offene Verbindung bereitstellt. Diese Verbindung wird dann durch das Ventil 5 geschlossen und auf Bedarf wieder geöffnet. Das Außenstück 42 des Ventilanschlussstücks 4 kann dabei Verbindungsmittel zur druckstabilen Aufnahme des Ventils 5 umfassen. Für Details zum Außenstück 42, zweiteiligem Dichtkonus 41, Auswölbung 23 und den erzeugten Dichtungswülsten 24a, 24b und Wulst 24c wird auf die Figuren 2 und 3 verwiesen.

Fig.2 zeigt den in Fig. 1 dargestellten Druckbehälter 1 in einer vergrößerten Ausschnittdarstellung des Ventilanschlussstücks 4 mit zweiteiligem Dichtkonus 41, Außenstück 42 und Auswölbung 23 der Polkappe 22 des Innenbehälters 2 entlang der Zylinderachse ZA. Der zweiteilige Dichtkonus 41 mit Hülse 411 und Klemmkonus 412 ist an der Innenseite 23i der Auswölbung 23 und das Außenstück 42 an der Außenseite 23a der Auswölbung 23 zur Erzeugung eines Abdichtdrucks AD zwischen zweiteiligem Dichtkonus 41, Auswölbung 23 und Außenstück 42 positioniert. Dabei weist das Außenstück 42 auf seiner zur Auswölbung 23 hin ausgerichteten Seite 42i eine Nut 421 mit einer dem Speichervolumen SV zugewandten ersten Kante 421a und einer in entgegengesetzter Richtung vorhandenen zweiten Kante 421b auf, um den unter dem Abdichtdruck AD abdichtenden Dichtungsrings 6 aufzunehmen und in Position zu halten, wenn das Außenstück 42 auf die Auswölbung 23 geschoben wird. Die Nut 421 und der Dichtungsring 6, beispielsweise ein O-Ring, so dabei dimensioniert, dass Lücken L1, L2 (siehe Fig.3) zwischen Dichtungsring 6 und erster sowie zweiter Kante 421a, 421b existieren, in die das plastisch verformbare Innenbehältermaterial eindringen kann, um erfindungsgemäß die ersten und zweiten Dichtungswülste 24a, 24b (ggf. zusätzlich Dichtungswulst 24c entlang der Unterseite 411u der Hülse 411) auszubilden, die in die Lücken L1 und L2 hineinragen. Des Weiteren ist der zweiteilige Dichtkonus 41 oder das Außenstück 42 so geformt ist, dass zwischen dem Speichervolumen SV und der Oberseite 23o der Auswölbung 23 (die Seite, die in Richtung der Außenseite des Druckbehälters 1 ausgerichtet ist) sowie durch die Hülse 411 (gestrichelt angedeuteter Gaskanal GV) und der Oberseite des Klemmkonus 412 eine offene Gasverbindung GV zum Speichervolumen SV besteht. Da die Hülse 411 eine der Auswölbung 23 zugewandte Außenseite 411a und eine entgegengesetzte Innenseite 411i umfasst, wobei die Fläche der auf der Auswölbung 23 aufliegende Außenseite 411a der Hülse 411 kleiner ist als deren Innenseite 411i, bewirkt der Innendruck im Speichervolumen SV des Druckbehälters 1, dass die Hülse 411 zusätzlich aufgrund der Flächenverhältnisse in Richtung der Auswölbung 23 und damit gegen die Innenseite 42i des Außenstücks 42 gepresst wird. Gleiches gilt für den Klemmkonus 412 mit gleichen Flächenverhältnissen für Außenseite 412a und Innenseite 412i. Die Nut 421 kann dabei eine Kontur besitzen, die an eine Form des Dichtungsrings 6 im unbelasteten Zustand angepasst ist (siehe Fig.3). Hierbei ist die Außenschicht 3 auf der Außenseite 2a des Innenbehälters 2 aufgebracht, während dessen Innenseite 2i das Speichervolumen SV definiert. Die hohlförmige äußere Hülse 411 besitzt einen kleinsten Innendurchmesser DI-411, einen auf den Durchmesser der Auswölbung D-23 angepassten Außendurchmesser DA-411 sowie eine entsprechend angepasste Kontur, die im Bereich oberhalb der Oberseite 23o der Auswölbung 23 nach außen die Auswölbung 23 überragt, damit die Hülse 411 nicht zu weit in Richtung des Speichervolumens SV geschoben werden kann. Die Innenseite 411i der Hülse 411 ist hier in Richtung der Auswölbung 23 zumindest lokal eingewölbt. Diese Einwölbung kann aber auch erst aufgrund des vom Klemmkonus ausgeübten Drucks entstehen. Der hohlförmige innere Klemmkonus 412 besitzt einen größten Außendurchmesser D-412 kleiner als ein Innendurchmesser D-23 der Auswölbung 23 und größer als der kleinste Innendurchmesser DI-411 der Hülse 411 sowie eine in Richtung der Auswölbung 23 angeordnete Außenseite 412a, wobei die Außenseite 412a des Klemmkonus 412 von innen mit Hilfe eines Positionierungsmittels 7 eingreift, so dass der innere Klemmkonus 412 in einen Presssitz mit der Hülse 411 gebracht ist und dadurch den gewünschten Abdichtdruck AD gegen die Auswölbung 23 und das Außenstück 42 ausübt.

Fig.3 zeigt eine schematische Darstellung des erfindungsgemäßen Dichtungskonzepts mit Außenstück 42, Auswölbung 23 der Polkappe 22 des Innenbehälters 2, zweiteiligem Dichtkonus 41 und den ausgebildeten Dichtungswülsten 24a, 24b, 24c. In Fig.3a wird der Klemmkonus mittels einer Positionierhilfe 7 durch die Auswölbung 23 hindurch in das Speichervolumen SV des Innenbehälters 2 hineingeschoben und dort gehalten, da sein Außendurchmesser D-412 kleiner ist als der Innendurchmesser D-23 der Auswölbung 23. Danach wird die Hülse 411 von außen in einen Passsitz auf die Innenseite 23i der Auswölbung 23 geschoben, während die Positionierhilfe 7 und der Klemmkonus 412 davon nicht betroffen werden, siehe Fig.3b. Anschließend wird das Außenstück 42 auf die Außenseite 23a der Auswölbung 23 aufgesetzt, wobei das Außenstück 42 auf seiner zur Auswölbung 23 ausgerichteten Seite 42i eine geeignet geformte Nut 421 mit einer dem späteren Speichervolumen SV zugewandten ersten Kante 421a und einer in entgegengesetzter Richtung vorhandenen zweiten Kante 421b und einen in der Nut 421 positionierten und unter einem Abdichtdruck AD abdichtenden Dichtungsring 6 aufweist, siehe Fig. 3c. Auch hiervon werden die Positionierhilfe 7 und der Klemmkonus 412 nicht betroffen. Zu diesem Zeitpunkt bilden sich noch keine Dichtungswülste 24a, 24b, 24c aus, da der dafür notwendige Abdichtdruck AD erst nach Positionierung des Klemmkonus 412 von Innen in die Hülse 411 und damit auch in die Auswölbung 23 erzeugt wird. Danach wird der Klemmkonus 412 mit Hilfe der Positionierhilfe 7 von innen in die Hülse 411 gezogen, wobei die Außenseite 412a des Klemmkonus 412 in die Innenseite 411i der Hülse 411 zu einem dadurch verankerten Presssitz zwischen beiden Komponenten eingreift, sodass ein Abdichtdruck AD zwischen zweiteiligem Dichtkonus 41, Auswölbung 23 und Außenstück 42 erzeugt wird, der zur Ausbildung der Dichtwülste 24a, 24b, 24c führt, siehe Fig.3d. Die Wölbung der Innenseite411i der Hülse 411 unterhalb des Klemmkonus 412 verhindert ein Verrutschen des Klemmkonus 412 in Richtung des Speichervolumens SV. Die ersten und zweiten Dichtungswülste 24a, 24b stellen zusammen mit der konventionellen Dichtung (O-Ring-zu Auswölbung) eine freifach-redundante Abdichtung des Speichervolumens SV gegen die Außenseite des Druckbehälters 1 dar. Außerdem sind die Hülse 411 und der Klemmkonus 412 hier so dimensioniert, dass das Innenbehältermaterial aufgrund seiner plastischen Verformbarkeit zusätzlich einen dritten Wulst 24c auf der zum Speichervolumen SV hin gerichteten Unterseite 411u der Hülse 411 ausbildet. Mit diesem dritten Wulst 24c wird die freifach-redundante Abdichtung insofern unterstützt, als dass die Hülse 411 und damit der der gesamte Dichtkonus 41 durch den dritten Wulst 24c in seiner Position gehalten wird und somit nicht in den Innenbehälter hineinrutschen oder gar hineinfallen kann. Anschließend kann die Positionierhilfe 7 aus dem Druckbehälter 1 entfernt werden, beispielsweise indem der verspreizte Unterteil der Positionierhilfe 7, der den Klemmkonus 412 hält und führt, in Richtung der Zylinderachse ZA parallel zur Zylinderachse ZA mittels einer entsprechenden Mechanik umgeklappt wird oder im Falle einer Gewindestange aus dem entsprechenden Gewinde auf der Innenseite des Klemmkonus 412 herausgeschraubt wird. Die so schmal gemachte oder herausschraubbare Positionierhilfe 7 kann leicht durch die verbleibende innere Öffnung des Klemmkonus 412 gezogen werden.

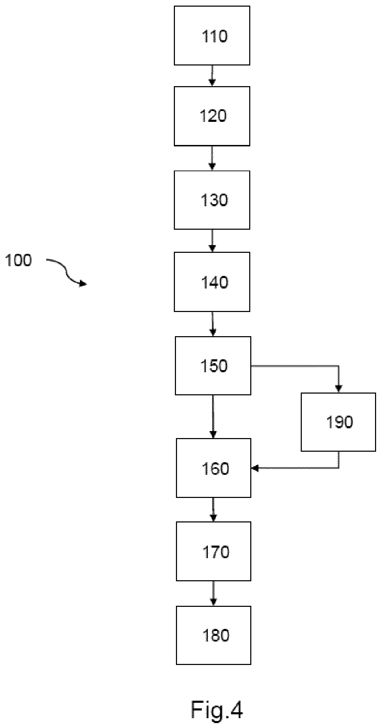

Fig.4 zeigt eine Ausführungsform des erfindungsgemäßen Verfahrens 100 zur Herstellung des erfindungsgemäßen Druckbehälters 1 umfassend einen Innenbehälter 2 mit einer Innen- und Außenseite 2i, 2a aus einem unter Druck zumindest teilweise plastisch verformbaren Innenbehältermaterial ausgestaltet zur Aufnahme eines Ventils 5, eine auf den Innenbehälter 2 positionierte Außenschicht 3 und ein Ventilanschlussstück 4 mit einem zweiteiligen Dichtkonus 41 aus einer hohlförmigen äußeren Hülse 411 und einem hohlförmigen inneren Klemmkonus 412 sowie einem Außenstück 42, umfassend die nachfolgenden Schritte des Bereitstellens 110 des Innenbehälters 2 mit einem Speichervolumen SV und einer zylinderförmig aus der Außenseite 2a des Innenbehälters 2 hervorragenden innen offenen Auswölbung 23; des Positionierens 120 des Klemmkonus 412 mit einem größten Außendurchmesser D-412 kleiner als ein Innendurchmesser D-23 der Auswölbung 23 und einem größten Außendurchmesser D-412 größer als der kleinste Innendurchmesser D-411 der Hülse 411 in Richtung der Auswölbung 23 mittels einer Positionierhilfe 7 durch die Auswölbung 23 hindurch im Speichervolumen SV des Innenbehälters 2; des Einsetzens 130 der hohlförmigen Hülse des Dichtkonus 41 von außen in einen Passsitz auf die Innenseite 23i der Auswölbung 23, wobei die Hülse 411 einen kleinsten Innendurchmesser D-411 und einen auf die Auswölbung 23 angepassten Außendurchmesser 411a umfasst, während Positionierhilfe 7 und Klemmkonus 412 davon nicht beeinflusst werden; des Aufsetzens 140 des Außenstücks 42 auf die Außenseite 23a der Auswölbung 23, wobei das Außenstück 42 auf seiner zur Auswölbung 23 ausgerichteten Seite 42i eine geeignet geformte Nut 421 mit einer dem späteren Speichervolumen SV zugewandten ersten Kante 421a und einer in entgegengesetzter Richtung vorhandenen zweiten Kante 421b und einen in der Nut 421 positionierten und unter einem Abdichtdruck AD abdichtenden Dichtungsring 6 aufweist; des Positionierens 150 des Klemmkonus 412 mit Hilfe der Positionierhilfe 7 von innen in die Hülse 411, wobei die Außenseite des Klemmkonus in die Innenseite der Hülse zu einem Presssitz mit der Hülse 411 eingreift, sodass ein Abdichtdruck AD zwischen zweiteiligem Dichtkonus 41, Auswölbung 23 und Außenstück 42 erzeugt wird; des Ausbildens 160 zumindest von ersten und zweiten Dichtungswülsten 24a, 24b, die unter dem Abdichtdruck AD bei entsprechend dimensionierter Nut 421 und Dichtungsring 6 aufgrund der plastischen Verformbarkeit des Innenbehältermaterials in beide Lücken L1, L2 zwischen Dichtungsring 6 und erster sowie zweiter Kante 421a, 421b zur Abdichtung des Speichervolumens gegenüber dem späteren Innenbehälter 2 hineinragen; gegebenenfalls des Ausbildens 190 einer dritten Wulst 24c um die Hülse 411 auf seiner zum Speichervolumen SV hin gerichteten Unterseite 41u aufgrund der plastischen Verformbarkeit des Innenbehältermaterials; des Herstellens 170 der Außenschicht 3 auf dem Innenbehälter 2 zur Verstärkung des Druckbehälters 1; und des Aufsetzens 180 des Ventils 5 in das Ventilanschlussstück 4 zum Verschluss des Druckbehälters 1. Hierbei kann die Außenschicht 3 aus Faserverbundmaterial bestehen und beim Schritt des Herstellens 160 auf den Innenbehälter 2 gewickelt werden. Hierbei kann auch das Einsetzen 130 der Hülse 411 bis zu einem Anschlag 4111 an der Hülse 411 auf eine Oberseite 23o der Auswölbung 23 und/oder das Aufsetzen 140 des Außenstücks 42 bis zum Kontakt einer Innenseite 42i des Außenstücks 42 auf der Hülse 411 und/oder auf dem Klemmkonus 412 durchgeführt werden. Außerdem kann der Innenbehälter 2 einteilig hergestellt werden.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### LISTE DER BEZUGSZEICHEN

- 1: erfindungsgemäßer Druckbehälter
- 2: Innenbehälter
- 2i: Innenseite des Innenbehälters
- 2a: Außenseite des Innenbehälters
- 21: Mittelteil des Innenbehälters
- 22: Polkappen des Innenbehälters
- 23: Auswölbung des Innenbehälters
- 23i: Innenseite der Auswölbung
- 23a: Außenseite der Auswölbung
- 23o: Oberseite der Auswölbung
- 24a: erste Dichtungswulst
- 24b: zweite Dichtungswulst
- 24c: dritte Wulst
- 3: Außenschicht
- 4: Ventilanschlussstück
- 41: zweiteiliger Dichtkonus
- 411: Hülse des Dichtkonus
- 411a: Außenseite der Hülse
- 411i: eingewölbte Innenseite der Hülse
- 411u: Unterseite Hülse
- 4111: Anschlag Hülse an Auswölbung
- 412: Klemmkonus des Dichtkonus
- 412a: vorgewölbten Außenseite des Klemmkonus
- 412i: Innenseite des Klemmkonus
- 42: Außenstück
- 42i: zur Auswölbung ausgerichteten Seite (Innenseite des Außenstücks)
- 421: Nut
- 421a: erste Kante
- 421b: zweite Kante
- 43: Sicherungselement
- 5: Ventil
- 6: Dichtungsring
- 7: Positionierungsmittel

- 100: Ein Verfahren zur Herstellung eines erfindungsgemäßen Druckbehälters
- 110: Bereitstellen des Innenbehälters
- 120: Positionieren des Klemmkonus im Speichervolumen des Innenbehälters
- 130: Einsetzen der hohlförmigen Hülse in die Auswölbung
- 140: Aufsetzen des Außenstücks von außen auf die Auswölbung
- 150: Positionieren des Klemmkonus mit Hilfe der Positionierhilfe in der Hülse
- 160: Ausbilden zumindest von ersten und zweiten Dichtungswülsten unter dem Abdichtdruck
- 170: Herstellen der Außenschicht auf dem Innenbehälter
- 180: Aufsetzen des Ventils in das Ventilanschlussstück
- 190: Ausbilden einer dritten Wulst

- AD: Abdichtdruck
- D-23: Innendurchmesser der Auswölbung
- DA-411: Außendurchmesser der Hülse des Dichtkonus
- DI-411: kleinster Innendurchmesser der Hülse des Dichtkonus
- D-412: größter Außendurchmesser des Klemmkonus
- GV: Gasverbindung
- L1, L2: Lücken zwischen erster beziehungsweise zweiter Kante der Nut und dem Dichtungsring
- SV: Speichervolumen
- ZA: Zylinderachse

## Patentansprüche

1. Ein Druckbehälter (1) umfassend einen Innenbehälter (2) mit einer Innen- und Außenseite (2i, 2a) aus einem unter Druck zumindest teilweise plastisch verformbaren Innenbehältermaterial zur Bereitstellung eines Speichervolumens (SV) im Druckbehälter, eine auf den Innenbehälter (2) zu dessen Verstärkung aufgebrachte Außenschicht (3), und ein auf dem Innenbehälter angeordnetes Ventilanschlussstück (4) mit zweiteiligem hohlförmigen Dichtkonus (41) und Außenstück (42) zur Aufnahme eines Ventils (5) und zur Abdichtung des Speichervolumens gegenüber dem Innenbehälter (2), der zum Anschließen des Ventilanschlussstücks (4) eine zylinderförmig aus der Außenseite (2a) des Innenbehälters (2) hervorragende zum Speichervolumen (SV) hin innen offene Auswölbung (23) umfasst, wobei der zweiteilige Dichtkonus (41) an einer Innenseite (23i) der Auswölbung (23) und das Außenstück (42) zur Erzeugung eines Abdichtdrucks (AD) zwischen zweiteiligem Dichtkonus (41), Auswölbung (23) und Außenstück (42) auf einer Außenseite (23a) der Auswölbung (23) positioniert ist und auf seiner zur Auswölbung (23) ausgerichteten Seite (42i) eine geeignet geformte Nut (421) mit einer dem Speichervolumen (SV) zugewandten ersten Kante (421a) und einer in entgegengesetzter Richtung vorhandenen zweiten Kante (421b) zur Aufnahme eines unter dem Abdichtdruck (AD) abdichtenden Dichtungsrings (6) aufweist, wobei die Nut (421) und der Dichtungsring (6) so dimensioniert sind und das Innenbehältermaterial dazu vorgesehen ist, unter dem Abdichtdruck (AD) aufgrund seiner plastischen Verformbarkeit zumindest in beiden Lücken (L1, L2) zwischen Dichtungsring (6) und erster sowie zweiter Kante (421a, 421b) hineinragende erste und zweite Dichtungswülste (24a, 24b) auszubilden, und der zweiteilige Dichtkonus (41) eine hohlförmige äußere Hülse (411) mit einem kleinsten Innendurchmesser (DI-411), einem auf die Auswölbung (23) angepassten Außendurchmesser (DA-411) und einer in Richtung der Auswölbung (23) zumindest lokal eingewölbten Innenseite (411i), und einen hohlförmigen inneren Klemmkonus (412) mit einem größten Außendurchmesser (D-412) kleiner als ein Innendurchmesser (D-23) der Auswölbung (23) und größer als der kleinste Innendurchmesser (DI-411) der Hülse (411) und einer in Richtung der Auswölbung (23) zumindest lokal vorgewölbten Außenseite (412a) umfasst, wobei die Hülse (411) von außen auf der Innenseite (23i) der Auswölbung (23) positioniert ist und die vorgewölbte Außenseite (412a) des Klemmkonus (412) von innen mit Hilfe eines Positionierungsmittels (7) eingreifend so in die eingewölbte Innenseite (411i) der Hülse (411) positioniert ist, dass der innere Klemmkonus (412) in einen Presssitz mit der Hülse (411) gebracht ist.

2. Der Druckbehälter (1) nach Anspruch 1,
**dadurch gekennzeichnet,**
**dass** der Innenbehälter (2) einteilig hergestellt ist.

3. Der Druckbehälter (1) nach Anspruch 1 oder 2,
**dadurch gekennzeichnet,**
**dass** die Hülse (411) so ausgeformt ist, dass sie zu einer Oberseite (23o) der Auswölbung (23) einen Anschlag (4111) umfasst und/oder zumindest teilweise an einer sich zumindest über Hülse (411) und Auswölbung (23) erstreckende Innenseite (42i) des Außenstücks (42) anliegt.

4. Der Druckbehälter (1) nach einem der voranstehenden Ansprüche,
**dadurch gekennzeichnet,**
**dass** die Hülse (411) so dimensioniert ist, dass das Innenbehältermaterial aufgrund seiner plastischen Verformbarkeit einen dritten Wulst (24c) um die Hülse (411) auf ihrer zum Speichervolumen (SV) hin gerichteten Unterseite (411u) ausbildet.

5. Der Druckbehälter (1) nach einem der voranstehenden Ansprüche,
**dadurch gekennzeichnet,**
**dass** der zweiteilige Dichtkonus (41) oder das Außenstück (42) so geformt ist, dass zwischen dem Speichervolumen (SV) und der Oberseite (23o) der Auswölbung (23) eine offene Gasverbindung (GV) zum Speichervolumen (SV) besteht.

6. Der Druckbehälter (1) nach Anspruch 5,
**dadurch gekennzeichnet,**
**dass** die Hülse (411) eine der Auswölbung (23) zugewandte Außenseite (411a) umfasst, wobei die Fläche der auf der Auswölbung (23) aufliegenden Außenseite (411a) der Hülse (411) und/oder die auf der Hülse (411) aufliegende Außenseite (412a) des Klemmkonus (412) kleiner ist als deren jeweilige Innenseiten (411i, 412i).

7. Der Druckbehälter (1) nach einem der voranstehenden Ansprüche,
**dadurch gekennzeichnet,**
**dass** die Nut (421) eine Kontur besitzt, die an eine Form des Dichtungsrings (6) im unbelasteten Zustand angepasst ist.

8. Der Druckbehälter (1) nach einem der voranstehenden Ansprüche,
**dadurch gekennzeichnet,**
**dass** das Innenbehältermaterial zumindest für die Auswölbung ein PA-, PE- oder ein Mehrschichtmaterial aus diesem Materialien ist.

9. Der Druckbehälter (1) nach einem der voranstehenden Ansprüche,
**dadurch gekennzeichnet,**
**dass** das Ventilanschlussstück (4) ein zusätzliches Sicherungselement (43) umfasst, das den zweiteiligen Dichtkonus (41) und das Außenstück (42) miteinander verbindet.

10. Der Druckbehälter (1) nach Anspruch 9,
**dadurch gekennzeichnet,**
**dass** das Sicherungselement (43) im Außenstück (42) gelagert ist und zumindest auf seiner dem zweiteilige Dichtkonus (41) zugewandten Seite ein Gewinde umfasst, das zum selbstschneidenden Eingriff in die Hülse (411) und/oder den Klemmkonus (412) vorgesehen ist.

11. Ein Verfahren (100) zur Herstellung eines Druckbehälters (1) nach Anspruch 1 umfassend einen Innenbehälter (2) mit einer Innen- und Außenseite (2i, 2a) aus einem unter Druck zumindest teilweise plastisch verformbaren Innenbehältermaterial ausgestaltet zur Aufnahme eines Ventils (5), eine auf dem Innenbehälter (2) positionierte Außenschicht (3) und ein Ventilanschlussstück (4) mit einem zweiteiligen Dichtkonus (41) aus einer hohlförmigen äußeren Hülse (411) und einem hohlförmigen inneren Klemmkonus (412) sowie einem Außenstück (42), umfassend die nachfolgenden Schritte:
- Bereitstellen (110) des Innenbehälters (2) mit einem Speichervolumen (SV) und einer zylinderförmig aus der Außenseite (2a) des Innenbehälters (2) hervorragenden innen offenen Auswölbung (23);
- Positionieren (120) des Klemmkonus (412) mit einem größten Außendurchmesser (D-412) kleiner als ein Innendurchmesser (D-23) der Auswölbung (23) und einem größten Außendurchmesser (D-412) größer als der kleinste Innendurchmesser (D-411) der Hülse (411) in Richtung der Auswölbung (23) mittels einer Positionierhilfe (7) durch die Auswölbung (23) hindurch im Speichervolumen (SV) des Innenbehälters (2);
- Einsetzen (130) der hohlförmigen Hülse des Dichtkonus (41) von außen in einen Passsitz auf die Innenseite (23i) der Auswölbung (23), wobei die Hülse (411) einen kleinsten Innendurchmesser (D-411) und einen auf die Auswölbung (23) angepassten Außendurchmesser (411a) umfasst, während Positionierhilfe (7) und Klemmkonus (412) davon nicht beeinflusst werden;
- Aufsetzen (140) des Außenstücks (42) auf die Außenseite (23a) der Auswölbung (23), wobei das Außenstück (42) auf seiner zur Auswölbung (23) ausgerichteten Seite (42i) eine geeignet geformte Nut (421) mit einer dem späteren Speichervolumen (SV) zugewandten ersten Kante (421a) und einer in entgegengesetzter Richtung vorhandenen zweiten Kante (421b) und einen in der Nut (421) positionierten und unter einem Abdichtdruck (AD) abdichtenden Dichtungsring (6) aufweist;
- Positionieren (150) des Klemmkonus (412) mit Hilfe der Positionierhilfe (7) von innen in der Hülse (411), wobei die Außenseite (412a) des Klemmkonus (412) in die Innenseite (411i) der Hülse (411) zu einem Presssitz mit der Hülse (411) eingreift, sodass ein Abdichtdruck (AD) zwischen zweiteiligem Dichtkonus (41), Auswölbung (23) und Außenstück (42) erzeugt wird;
- Ausbilden (160) zumindest von ersten und zweiten Dichtungswülsten (24a, 24b), die unter dem Abdichtdruck (AD) bei entsprechend dimensionierter Nut (421) und Dichtungsring (6) aufgrund der plastischen Verformbarkeit des Innenbehältermaterials in beide Lücken (L1, L2) zwischen Dichtungsring (6) und erster sowie zweiter Kante (421a, 421b) zur Abdichtung des Speichervolumens (SV) gegenüber dem späteren Innenbehälter (2) hineinragen;
- Herstellen (170) der Außenschicht (3) auf dem Innenbehälter (2) zur Verstärkung des Druckbehälters (1); und
- Aufsetzen (180) des Ventils (5) in das Ventilanschlussstück (4) zum Verschluss des Druckbehälters (1).

12. Das Verfahren (100) nach Anspruch 11, umfassend den weiteren Schritt des Ausbildens (190) einer dritten Wulst (24c) um die Hülse (411) auf ihrer zum Speichervolumen (SV) hin gerichteten Unterseite (411u) aufgrund der plastischen Verformbarkeit des Innenbehältermaterials.

13. Das Verfahren (100) nach Anspruch 11 oder 12, wobei die Außenschicht (3) aus Faserverbundmaterial besteht und beim Schritt des Herstellens (160) auf den Innenbehälter (2) gewickelt wird.

14. Das Verfahren (100) nach einem der Ansprüche 11 bis 13, wobei das Einsetzen (130) der Hülse (411 bis zu einem Anschlag (4111) an der Hülse (411) auf eine Oberseite (23o) der Auswölbung (23) und/oder das Aufsetzen (140) des Außenstücks (42) bis zum Kontakt einer Innenseite (42i) des Außenstücks (42) auf der Hülse (411) und/oder auf dem Klemmkonus (412) durchgeführt werden.

15. Das Verfahren (100) nach einem der Ansprüche 11 bis 14, wobei der Innenbehälter (2) einteilig hergestellt wird.

## Claims

1. Pressure vessel (1) comprising an inner vessel (2) that has an inner and an outer face (2i, 2a) and is made of an inner-vessel material that is at least partially plastically deformable under pressure, for providing a storage volume (SV) in the pressure vessel, comprising an outer layer (3) applied to the inner vessel (2) for the reinforcement thereof, and comprising a valve-connection piece (4) arranged on the inner vessel that has a two-part, hollow sealing cone (41) and outer piece (42) for receiving a valve (5) and for sealing the storage volume from the inner vessel (2), which, for connecting the valve-connection piece (4), comprises a protrusion (23) that is inwardly open towards the storage volume (SV) and projects cylindrically from the outer face (2a) of the inner vessel (2), wherein the two-part sealing cone (41) is positioned on an inner face (23i) of the protrusion (23) and the outer piece (42) for generating a sealing pressure (AD) between the two-part sealing cone (41), the protrusion (23) and the outer piece (42) on an outer face (23a) of the protrusion (23), and comprises, on the face (42i) thereof oriented towards the protrusion (23), a suitably shaped groove (421) having a first edge (421a) facing the storage volume (SV) and a second edge (421b) provided in the opposite direction for receiving a sealing ring (6) that seals under the sealing pressure (AD), wherein the groove (421) and the sealing ring (6) are dimensioned such that and the inner-vessel material is provided such that, under the sealing pressure (AD) and due to the plastic deformability thereof, first and second sealing beads (24a, 24b) that project at least into two gaps (L1, L2) between the sealing ring (6) and the first and second edge (421a, 421b) are formed, and the two-part sealing cone (41) comprises a hollow outer sleeve (411) having a smallest internal diameter (DI-411), an external diameter (DA-411) adapted to the protrusion (23) and an inner face (411i) that is at least locally concave towards the protrusion (23), and comprises a hollow inner clamping cone (412) having a largest external diameter (D-412) that is smaller than an internal diameter (D-23) of the protrusion (23) and larger than the smallest internal diameter (DI-411) of the sleeve (411) and an outer face (412a) that at least locally projects towards the protrusion (23), wherein the sleeve (411) is positioned on the inner face (23i) of the protrusion (23) from outside and the projecting outer face (412a) of the clamping cone (412) is positioned from inside by means of a positioning means (7) so as to engage in the concave inner face (411i) of the sleeve (411) such that the inner clamping cone (412) is brought into an interference fit with the sleeve (411).

2. Pressure vessel (1) according to claim 1,
**characterised in that**
the inner vessel (2) is produced in one piece.

3. Pressure vessel (1) according to claim 1 or 2,
**characterised in that**
the sleeve (411) is shaped such that it comprises a stop (4111) facing an upper face (23o) of the protrusion (23) and/or at least partially abuts an inner face (42i) of the outer piece (42) extending at least over the sleeve (411) and the protrusion (23).

4. Pressure vessel (1) according to any of the preceding claims,
**characterised in that**
the sleeve (411) is dimensioned such that the inner-vessel material forms, due to its plastic deformability, a third bead (24c) around the sleeve (411) on its lower face (411u) directed towards the storage volume (SV).

5. Pressure vessel (1) according to any of the preceding claims,
**characterised in that**
the two-part sealing cone (41) or the outer piece (42) is formed such that there is an open gas connection (GV) towards the storage volume (SV) between the storage volume (SV) and the upper face (23o) of the protrusion (23).

6. Pressure vessel (1) according to claim 5,
**characterised in that**
the sleeve (411) comprises an outer face (411a) facing the protrusion (23), the surface area of the outer face (411a) of the sleeve (411) abutting the protrusion (23) and/or the outer face (412a) of the clamping cone (412) abutting the sleeve (411) being smaller than that of the respective inner faces (411i, 412i).

7. Pressure vessel (1) according to any of the preceding claims,
**characterised in that**
the groove (421) has a contour which is adapted to a shape of the sealing ring (6) in the unloaded state.

8. Pressure vessel (1) according to any of the preceding claims,
**characterised in that**
the inner-vessel material, at least for the protrusion, is a PA material, a PE material or a multi-layered material made of these materials.

9. Pressure vessel (1) according to any of the preceding claims,
**characterised in that**
the valve-connection piece (4) comprises an additional securing element (43) which interconnects the two-part sealing cone (41) and the outer piece (42).

10. Pressure vessel (1) according to claim 9,
**characterised in that**
the securing element (43) is mounted in the outer piece (42) and comprises a thread, which is provided for self-cutting engagement in the sleeve (411) and/or the clamping cone (412), at least on its side facing the two-part sealing cone (41).

11. Method (100) for producing a pressure vessel (1) according to claim 1, comprising an inner vessel (2) that has an inner and an outer face (2i, 2a) and is made of an inner-vessel material that is at least partially plastically deformable under pressure and is designed to receive a valve (5), an outer layer (3) positioned on the inner vessel (2) and a valve-connection piece (4) comprising a two-part sealing cone (41) made up of a hollow outer sleeve (411) and a hollow inner clamping cone (412), as well as an outer piece (42), comprising the following steps:
- providing (110) the inner vessel (2) with a storage volume (SV) and an inner, open protrusion (23) that projects cylindrically from the outer face (2a) of the inner vessel (2),
- positioning (120) the clamping cone (412) having a largest external diameter (D-412) that is smaller than an internal diameter (D-23) of the protrusion (23) and a largest external diameter (D-412) that is larger than the smallest internal diameter (D-411) of the sleeve (411) towards the protrusion (23) by means of a positioning aid (7), through the protrusion (23), in the storage volume (SV) of the inner vessel (2);
- inserting (130) the hollow sleeve of the sealing cone (41) from outside into a tight fit on the inner face (23i) of the protrusion (23), the sleeve (411) having a smallest internal diameter (D-411) and an external diameter (411a) adapted to the protrusion (23), while the positioning aid (7) and the clamping cone (412) are not influenced thereby;
- fitting (140) the outer piece (42) onto the outer face (23a) of the protrusion (23), the outer piece (42) comprising, on its face (42i) oriented towards the protrusion (23), a suitably shaped groove (421) having a first edge (421a) facing the subsequent storage volume (SV) and a second edge (421b) provided in the opposite direction, and a sealing ring (6) that is positioned in the groove (421) and seals under a sealing pressure (AD),
- positioning (150) the clamping cone (412) by means of the positioning aid (7) from inside in the sleeve (411), the outer face (412a) of the clamping cone (412) engaging in the inner face (411i) of the sleeve (411) to form an interference fit with the sleeve (411), such that a sealing pressure (AD) is produced between the two-part sealing cone (41), the protrusion (23) and the outer piece (42);
- forming (160) at least first and second sealing beads (24a, 24b), which, under the sealing pressure (AD) and with an accordingly dimensioned groove (421) and sealing ring (6), project into two gaps (L1, L2) between the sealing ring (6) and the first and second edge (421a, 421b) due to the plastic deformability of the inner-vessel material in order to seal the storage volume (SV) from the subsequent inner vessel (2);
- producing (170) the outer layer (3) on the inner vessel (2) in order to reinforce the pressure vessel (1); and
- fitting (180) the valve (5) into the valve-connection piece (4) in order to close the pressure vessel (1).

12. Method (100) according to claim 11, comprising the further step of forming (190) a third bead (24c) around the sleeve (411) on its lower face (411u) directed towards the storage volume (SV) due to the plastic deformability of the inner-vessel material.

13. Method (100) according to claim 11 or 12, wherein the outer layer (3) consists of fibre composite material and is wound onto the inner vessel (2) in the producing step (160).

14. Method (100) according to any of claims 11 to 13, wherein the sleeve (411) is inserted (130) onto an upper face (23o) of the protrusion (23) as far as a stop (4111) on the sleeve (411) and/or the outer piece (42) is fitted (140) to the sleeve (411) and/or to the clamping cone (412) until it comes into contact with an inner face (42i) of the outer piece (42).

15. Method (100) according to any of claims 11 to 14, wherein the inner vessel (2) is produced in one piece.

## Revendications

1. Contenant sous pression (1) comprenant un contenant intérieur (2) avec une face intérieure et une face extérieure (2i, 2a) en un matériau de contenant intérieur au moins en partie plastiquement déformable sous l'effet d'une pression, servant à fournir un volume de stockage (SV) dans le contenant sous pression, une couche extérieure (3) appliquée sur le contenant intérieur (2) aux fins de son renforcement, et une pièce de raccordement de soupape (4) disposée sur le contenant intérieur, avec un cône étanche (41) en deux parties de forme creuse et une pièce extérieure (42) servant à loger une soupape (5) et servant à étanchéifier le volume de stockage par rapport au contenant intérieur (2), qui comprend, aux fins du raccordement de la pièce de raccordement de soupape (4), un bombement (23) ouvert côté intérieur en direction du volume de stockage (SV), faisant saillie en forme de cylindre de la face extérieure (2a) du contenant intérieur (2), dans lequel le cône étanche (41) en deux parties est positionné au niveau d'une face intérieure (23i) du bombement (23) et la pièce extérieure (42) servant à générer une pression d'étanchéification (AD) entre le cône étanche (41) en deux parties, le bombement (23) et la pièce extérieure (42) est positionnée sur une face extérieure (23a) du bombement (23) et présente, sur sa face (42i) orientée vers le bombement (23), une rainure (421) façonnée de manière adaptée, pourvue d'une première arête (421a) tournée vers le volume de stockage (SV) et d'une deuxième arête (421b) présente dans une direction opposée, servant à recevoir une bague d'étanchéité (6) ayant une action d'étanchéification sous l'effet de la pression d'étanchéification (AD), dans lequel la rainure (421) et la bague d'étanchéité (6) sont dimensionnées de telle sorte et le matériau de contenant intérieur est prévu pour réaliser des premiers et deuxièmes bourrelets d'étanchéité (24a, 24b) dépassant sous l'effet de la pression d'étanchéification (AD) en raison de sa déformabilité plastique au moins dans deux interstices (L1, L2) entre la bague d'étanchéité (6) et la première et la deuxième arête (421a, 421b), et le cône étanche (41) en deux parties comprend un manchon extérieur (411) de forme creuse avec un diamètre intérieur (DI-411) le plus petit, un diamètre extérieur (DA-411) adapté au bombement (23) et une face intérieure (411i) bombée vers l'intérieur au moins localement en direction du bombement (23), et un cône de serrage intérieur (412) de forme creuse avec un diamètre extérieur (D-412) le plus grand, inférieur à un diamètre intérieur (D-23) du bombement (23) et supérieur au diamètre intérieur le plus petit (DI-411) du manchon (411) et une face extérieure (412a) bombée au préalable au moins localement en direction du bombement (23), dans lequel le manchon (411) est positionné depuis l'extérieur sur la face intérieure (23i) du bombement (23) et le côté extérieur (412a) bombé au préalable du cône de serrage (412) est positionné depuis l'intérieur à l'aide d'un moyen de positionnement (7) de manière à venir en prise de telle sorte avec la face intérieure (411i) bombée vers l'intérieur du manchon (411) que le cône de serrage intérieur (412) est amené dans un ajustement serré avec le manchon (411).

2. Contenant sous pression (1) selon la revendication 1,
**caractérisé en ce**
**que** le contenant intérieur (2) est fabriqué en une partie.

3. Contenant sous pression (1) selon la revendication 1 ou 2,
**caractérisé en ce**
**que** le manchon (411) est formé de telle sorte qu'il comprend en direction d'une face supérieure (23o) du bombement (23) une butée (4111) et/ou repose au moins en partie au niveau d'une face intérieure (42i), s'étendant au moins pardessus le manchon (411) et le bombement (23), de la pièce extérieure (42).

4. Contenant sous pression (1) selon l'une quelconque des revendications précédentes,
**caractérisé en ce**
**que** le manchon (411) est dimensionné de telle sorte que le matériau de contenant intérieur réalise en raison de sa déformabilité plastique un troisième bourrelet (24c) autour du manchon (411) sur sa face inférieure (411u) dirigée en direction du volume de stockage (SV).

5. Contenant sous pression (1) selon l'une quelconque des revendications précédentes,
**caractérisé en ce**
**que** le cône étanche (41) en deux parties ou la pièce extérieure (42) est formé ou formée de telle sorte qu'il existe une liaison de gaz (GV) ouverte avec le volume de stockage (SV) entre le volume de stockage (SV) et la face supérieure (23o) du bombement (23).

6. Contenant sous pression (1) selon la revendication 5,
**caractérisé en ce**
**que** le manchon (411) comprend une face extérieure (411a) tournée vers le bombement (23), dans lequel la surface de la face extérieure (411a), reposant sur le bombement (23), du manchon (411) et/ou la face extérieure (412a), reposant sur le manchon (411), du cône de serrage (412) est inférieure à celle des faces intérieures (411i, 412i) respectives.

7. Contenant sous pression (1) selon l'une quelconque des revendications précédentes,
**caractérisé en ce**
**que** la rainure (421) possède un contour, qui est adapté à une forme de la bague d'étanchéité (6) dans l'état non soumis à une charge.

8. Contenant sous pression (1) selon l'une quelconque des revendications précédentes,
**caractérisé en ce**
**que** le matériau de contenant intérieur au moins pour le bombement est un matériau à base de PE, de PE ou un matériau multicouche composé desdits matériaux.

9. Contenant sous pression (1) selon l'une quelconque des revendications précédentes,
**caractérisé en ce**
**que** la pièce de raccordement de soupape (4) comprend un élément de blocage (43) supplémentaire, qui relie l'un à l'autre le cône étanche (41) en deux parties et la pièce extérieure (42).

10. Contenant sous pression (1) selon la revendication 9,
**caractérisé en ce**
**que** l'élément de blocage 43) est monté dans la pièce extérieure (42) et comprend, au moins sur sa face tournée vers le cône étanche (41) en deux parties, un filetage, qui est prévu pour venir en prise avec taraudage automatique avec le manchon (411) et/ou le cône de serrage (412).

11. Procédé (100) servant à fabriquer un contenant sous pression (1) selon la revendication 1, comprenant un contenant intérieur (2) avec une face intérieure et une face extérieure (2i, 2a) en un matériau de contenant intérieur au moins en partie élastiquement déformable sous l'effet d'une pression configuré pour loger une soupape (5), une couche extérieure (3) positionnée sur le contenant intérieur (2) et une pièce de raccordement de soupape (4) avec un cône étanche (41) en deux parties composé d'un manchon (411) extérieur de forme creuse et d'un cône de serrage (412) intérieur de forme creuse, et d'une pièce extérieure (42), comprenant les étapes qui suivent :
- de fourniture (110) du contenant intérieur (2) avec un volume de stockage (SV) et un bombement (23) ouvert côté intérieur faisant saillie en forme de cylindre de la face extérieure (2a) du contenant intérieur (2) ;
- de positionnement (120) du cône de serrage (412) avec un diamètre extérieur plus grand (D-412) inférieur à un diamètre intérieur (D-23) du bombement (23) et un diamètre extérieur plus grand (D-412) supérieur au diamètre intérieur le plus petit (D-411) du manchon (411) en direction du bombement (23) au moyen d'une aide au positionnement (7) à travers le bombement (23) dans le volume de stockage (SV) du contenant intérieur (2) ;
- d'insertion (130) du manchon de forme creuse du cône étanche (41) depuis l'extérieur dans un ajustement serré sur la face intérieure (23i) du bombement (23), dans lequel le manchon (411) comprend un diamètre intérieur le plus petit (D-411) et un diamètre extérieur (411a) adapté au bombement (23), tandis que l'aide au positionnement (7) et le cône de serrage (412) n'en sont pas affectés ;
- de placement (140) de la pièce extérieure (42) sur la face extérieure (23a) du bombement (23), dans lequel la pièce extérieure (42) présente, sur sa face (42i) orientée vers le bombement (23), une rainure (421) de forme adaptée avec une première arête (421a) tournée vers le volume de stockage (SV) ultérieur et une deuxième arête (421b) présente dans une direction opposée et une bague d'étanchéité (6) positionnée dans la rainure (421) ayant une action d'étanchéification sous l'effet d'une pression d'étanchéification (AD) ;
- de positionnement (150) du cône de serrage (412) à l'aide de l'aide au positionnement (7) depuis l'intérieur dans le manchon (411), dans lequel la face extérieure (412a) du cône de serrage (412) vient en prise avec la face intérieure (411i) du manchon (411) pour former un ajustement serré avec le manchon (411) si bien qu'une pression d'étanchéification (AD)est générée entre le cône étanche (41) en deux parties, le bombement (23) et la pièce extérieure (42) ;
- de réalisation (160) d'au moins des premiers et deuxièmes bourrelets d'étanchéité (24a, 24b), qui dépassent, sous l'effet de la pression d'étanchéification (AD) pour une rainure (421) et une bague d'étanchéité (6) dimensionnées de manière correspondante, en raison de la déformabilité plastique du matériau de contenant intérieur, dans deux interstices (L1, L2) entre la bague d'étanchéité (6) et la première et la deuxième arête (421a, 421b) aux fins de l'étanchéification du volume de stockage (SV) par rapport au contenant intérieur (2) ultérieur ;
- de fabrication (170) de la couche extérieure (3) sur le contenant intérieur (2) aux fins du renforcement du contenant sous pression (1) ; et
- de placement (180) de la soupape (5) dans la pièce de raccordement de soupape (4) aux fins de la fermeture du contenant sous pression (1).

12. Procédé (100) selon la revendication 11, comprenant l'autre étape de la réalisation (190) d'un troisième bourrelet (24c) autour du manchon (411) sur sa face inférieure (411u) dirigée en direction du volume de stockage (SV) en raison de la déformabilité plastique du matériau de contenant intérieur.

13. Procédé (100) selon la revendication 11 ou 12, dans lequel la couche extérieure (3) est constituée d'un matériau composite à base de fibres et est enroulée sur le contenant intérieur (2) lors de l'étape de la fabrication (160).

14. Procédé (100) selon l'une quelconque des revendications 11 à 13, dans lequel l'insertion (130) du manchon (411) jusqu'à une butée (4111) au niveau du manchon (411) sur une face supérieure (23o) du bombement (23) et/ou le placement (140) de la pièce extérieure (42) jusqu'au contact d'une face intérieure (42i) de la pièce extérieure (42) sur le manchon (411) et/ou sur le cône de serrage (412) sont effectués.

15. Procédé (100) selon l'une quelconque des revendications 11 à 14, dans lequel le contenant intérieur (2) est fabriqué en une partie.
